# EUROPÄISCHE PATENTSCHRIFT

(11) **EP 0 457 036 B1**
(45) Veröffentlichungstag und Bekanntmachung des Hinweises auf die Patenterteilung: **27.12.1995**
(21) Anmeldenummer: 91105901.2
(22) Anmeldetag: 13.04.1991
(51) Int. Cl.: G11B 33/04, G11B 33/02, G11B 23/02, G11B 23/023

(54) **Vorrichtung zum stehenden Aufbewahren von viereckigen, steifen Hüllen**
Device for standing storage of square rigid envelopes
Dispositif pour le stockage en position verticale d'enveloppes rigides à quatre côtés

(30) Priorität: 12.05.1990 DE 4015314
(43) Veröffentlichungstag der Anmeldung: 21.11.1991
(73) Patentinhaber: Goller, Roland, D-88085 Langenargen (DE)
(72) Erfinder: Goller, Roland, D-88085 Langenargen (DE)
(74) Vertreter: Rüger, Rudolf, Dr.-Ing.

(56) Entgegenhaltungen:
- EP-A- 0 263 227
- EP-A- 0 334 457
- EP-A- 0 376 841

## Beschreibung

Die Erfindung betrifft eine Vorrichtung zum stehenden Aufbewahren von viereckigen, steifen und flachen Hüllen, mit den Merkmalen des Oberbegriffs des Anspruches 1.

Eine diese Merkmale aufweisende Vorrichtung ist aus EP-A-0263227 bekannt.

Ferner ist aus EP-A-0334457 eine weitere gattungsgemäße Aufbewahrungsvorrichtung bekannt. Sie enthält eine viereckige Schale mit paarweise parallel im Abstand zueinander verlaufenden niedrigen Seitenwänden, die sich senkrecht über einem ebenen Boden erheben. Die beiden längeren einander gegenüberstehenden Seitenwände sind mit einer Vielzahl prismatischer Zapfen versehen. Die Zapfen sind längs jeder Seitenwand äquidistant verteilt, und zwar so, daß mit jedem Zapfen auf der einen Seitenwand ein Zapfen auf der anderen Seitenwand fluchtet. Dadurch entstehen zwischen benachbarten Zapfen Zwischenräume, in die CD-Cassetten eingesteckt werden können, die dann mit ihrer im Gebrauch unten befindlichen Kante auf dem Boden der Aufbewahrungsvorrichtung aufstehen. Da der Abstand zwischen benachbarten Zapfen etwas größer ist als die Dicke der CD-Cassette, kann die CD-Cassette zwischen einer nach vorne geneigten Lage und einer nach hinten geneigten Lage hin- und hergeklappt werden. In beiden Fällen hat die CD-Cassette eine Schräglage von maximal 20° gegenüber der Vertikalen.

Die bekannte Vorrichtung ist durch die Anordnung der Zapfen auf die Aufbewahrung dieser Art von Hüllen beschränkt. Insbesondere können in der bekannten Vorrichtung nicht wahlweise dünnere Hüllen, beispielsweise die Hüllen von Floppydisks,aufgehoben werden. Diese sind gegenüber den Cassetten von CDs wesentlich dünner und würden wesentlich stärker zwischen den als Kippbegrenzung dienenden Zapfen hin- und herschwenken. Eine zu große Schräglage der an sich stehend aufzubewahrenden Hüllen ist jedoch unerwünscht.

Außerdem können in der bekannten Vorrichtung nur Hüllen aufbewahrt werden, die wenigstens in einer Abmessung etwa so groß sind wie der lichte Abstand zwischen den beiden mit den Zapfen versehenen Seitenwänden. Wesentlich kleinere Hüllen könnten nur zwischen die Zapfen von einer Seitenwand gesteckt werden, so daß sie an der anderen Kante nicht geführt werden. Bereits ein geringes Anstoßen würde kleine Hüllen zwischen den Zapfen verrutschen und dann umkippen lassen.

Ausgehend hiervon ist es Aufgabe der Erfindung, für das im wesentlichen stehende Aufbewahren von Hüllen eine Vorrichtung zu schaffen, die die sichere Halterung von Hüllen unterschiedlicher Stärke gestattet.

Zur Lösung dieser Aufgabe ist die erfindungsgemäße Vorrichtung durch die Merkmale des Anspruches 1 gekennzeichnet.

Die Verwendung der sich nach unten zu verjüngenden Schlitze sorgt dafür, daß auch dünne Hüllen, beispielsweise von Floppydisks, nur um denselben Winkel hin- und herkippen können wie die wesentlich stärkeren Cassetten von CD-Platten. In dem sich verjüngenden Schlitz werden die dickeren Cassetten von CD-Platten weiter oben stecken bleiben, wobei ihr Kippwinkel nach vorwärts und nach rückwärts durch den Flankenwinkel der Schlitze begrenzt ist. Die dünnen Hüllen von Floppydisks werden bis auf den Grund des Schlitzes vordringen können, aber in der gleichen Weise hinsichtlich des möglichen Kippwinkels durch den Flankenwinkel der Schlitze festgelegt sein.

Die neue Vorrichtung ist dadurch universell sowohl für dicke als auch für dünne Hüllen einsetzbar.

Da die aufzubewahrenden Hüllen nicht mit kontinuierlich sich verändernder Dicke auf dem Markt sind, sondern sich ihre Stärke in bestimmten Sprüngen ändert, während Zwischengrößen nicht auftreten, kann das Einklemmen der unteren Kante dickerer Hüllen zwischen den Rändern eines jeden Schlitzes dadurch vermieden werden, daß jeder Schlitz in seinen Flanken die gleiche Anzahl von Nuten enthält, deren Längsachse in der Gebrauchsstellung der Vorrichtung horizontal liegt. Diese Nuten öffnen sich V-förmig etwa aufeinander zu, so daß sich eine untere, geringfügig gegen die Horizontale geneigte und eine obere, geringfügig gegen die Vertikale geneigte Wand ergibt. In den beiden stabilen Grenzlagen, die die Hülle in der Vorrichtung einnehmen kann, liegt die Hülle mit ihrer unteren Kante auf der nur geringfügig schräg verlaufenden unteren Seite oder Wand der Nut auf.

Dabei wird ein Durchfallen einer dickeren Hülle in einen tiefer liegenden Bereich des Schlitzes dadurch vermieden, daß der Abstand, den die Wände von zwei einander entsprechenden Nuten eines Schlitzes haben, kleiner ist als die Dicke der betreffenden aufzubewahrenden Hülle.

Bei den derzeit auf dem Markt befindlichen Hüllenstärken genügt es, wenn in dem Schlitz in jeder Flanke drei Nuten vorgesehen sind, die von oben nach unten gesehen, zunehmend dichter aneinander heranrücken und auch kleinere Abmessungen haben. Die Cassetten von CD-Platten werden in den miteinander fluchtenden oberen Nuten sitzen, während beispielsweise die Cassetten von 3,5" Disketten auf den unteren Wänden der mittleren Nuten aufstehen. Nur die dünnen kuvertartigen Hüllen von großen Floppydisks oder ähnliche Hüllen benötigen die unteren an der tiefsten Stelle liegenden Nuten.

Wenn in ein und derselben Vorrichtung nicht nur Hüllen unterschiedlicher Stärke, sondern auch Hüllen unterschiedlicher Breite aufbewahrt werden sollen, ist zwischen den beiden mit Abstand zueinander verlaufenden Leisten noch wenigstens eine weitere, zu den äußeren Leisten parallellaufende Leiste angeordnet, die in der gleichen Weise mit Schlitzen versehen ist wie die äußeren Leisten. Hierdurch wird sichergestellt, daß auch schmale Hüllen an wenigstens zwei längs der Kante der Hülle entfernt liegenden Stellen von der Vorrichtung gehalten werden.

Da für gewöhnlich kleinere seitliche Abmessungen nur bei dünnen Hüllen auftreten, genügt eine zusätzliche Leiste, wenn sie im untersten Bereich der Schlitze in Richtung auf die äußeren Leisten verbreitert ist.

Eine sehr kompakte und stabile Vorrichtung wird erhalten, wenn die Leisten an den Seitenwänden einer flachen viereckigen Schale angeordnet sind und die Zwischenleiste, soweit vorhanden, am Boden der Schale vorgesehen ist. Eine solche Anordnung läßt sich auch kostengünstig als Kunststofformteil, beispielsweise spritzen.

In der Zeichnung ist ein Ausführungsbeispiel des Gegenstandes der Erfindung dargestellt. Es zeigen:
- Fig. 1: einen Teil der Vorrichtung in einer abgebrochenen perspektivischen Darstellung,
- Fig. 2: die Vorrichtung nach Fig. 1 in einer Draufsicht und
- Fig. 3: den Querschnitt eines Schlitzes aus der Vorrichtung nach Fig. 1 in einer Draufsicht auf eine vertikale Ebene parallel zu den mit den Schlitzen versehenen Leisten der Vorrichtung nach Fig. 1.

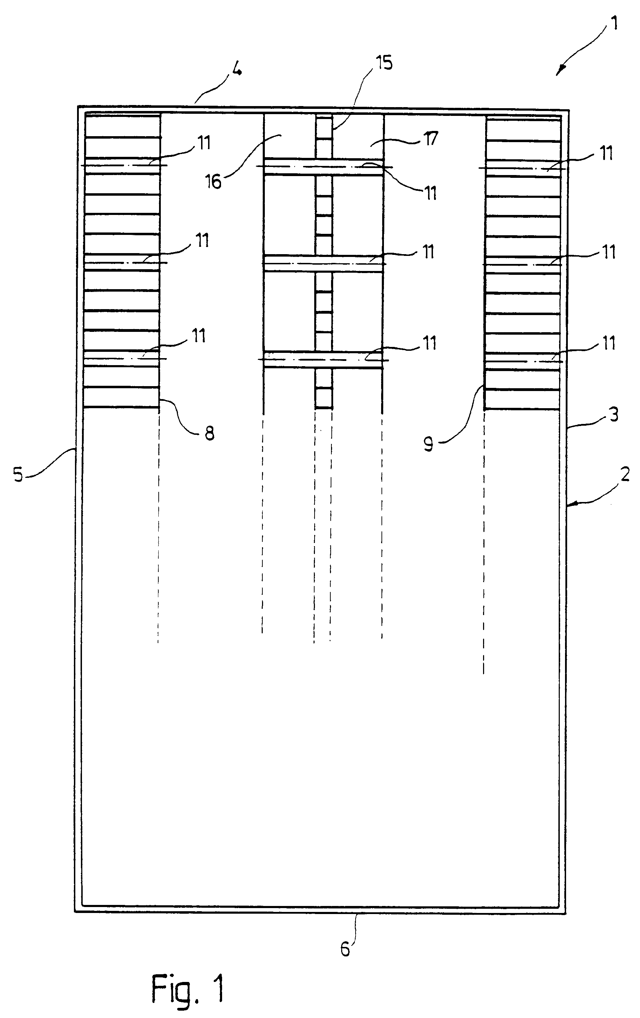

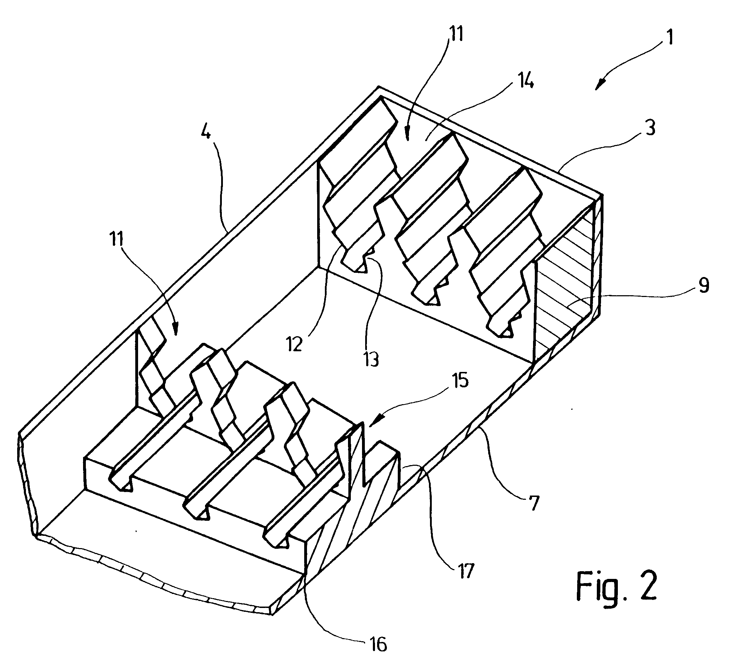

Eine in den Fig. 1 und 2 gezeigte Vorrichtung 1 zum stehenden Aufbewahren von ihm einzelnen nicht gezeigten viereckigen steifen und flachen Hüllen, wie Hüllen von CD-Platten, Minidisks, Disketten u.dgl. enthält eine flache rechteckige Schale 2 mit paarweise parallel zueinander verlaufenden Seitenwänden 3, 4, 5, 6 und einem im wesentlichen ebenen Boden 7. Die Seitenwände 3...6 und der Boden 7 sind einstückig miteinander verbunden. Jeweils neben der Innenseite der beiden Seitenwände 3 und 5 sind zwei Leisten 8 und 9 vorgesehen, die parallel mit Abstand zueinander verlaufen und sich über die gesamte Länge der beiden Seitenwände 3 und 5 zwischen den beiden Seitenwänden 4 und 6 erstrecken. Die Höhe der beiden Leisten 8 und 9 entspricht der Höhe der Seitenwände 3 und 5. In Fig. 2 ist wegen der abgebrochenen Darstellung der Vorrichtung 1 lediglich die Leiste 9 zu erkennen.

Beide Leisten 8, 9 sind bezüglich einer auf dem Boden 7 senkrecht stehenden Ebene spiegelsymmetrisch. Jede der beiden Leisten 8, 9 ist mit einer Vielzahl entlang ihrer Längserstreckung äquidistant verteilt angeordneten Schlitzen 11 versehen, und zwar so, daß mit jedem Schlitz 11 in einer der beiden Leisten 8, 9 ein entsprechender Schlitz 11 der anderen Leiste 8, 9 fluchtet. Jeder der Schlitze 8, 9 weist zwei einander gegenüberstehende und in Richtung auf den Boden 7 konvergierende Flanken 12, 13 sowie eine von dem Boden 7 weg, d.h. nach oben weisende Öffnung 14 auf. Außerdem ist jeder der Schlitze 11 in Richtung auf die gegenüberliegende Leiste 8, 9 offen, wie dies Fig. 2 erkennen läßt. Die beiden Flanken 12, 13 sind in der unten beschriebenen Weise profiliert und haben gegenüber der Vertikalen eine Neigung von 20° bis 30°.

Zusätzlich zu den beiden unmittelbar an die Innenseite der Seitenwände 3, 5 angeformten Leisten 8, 9 ist noch eine weitere, mittig zwischen diesen und zu ihnen parallele Leiste 15 vorhanden, die sich von der Innenseite der Seitenwand 4 bis zur Innenseite der Seitenwand 6 erstreckt und sich unmittelbar aus der Oberseite des Bodens 7 erhebt. Sie ist in ihrem oberen Bereich deutlich schmäler als die Breite der beiden Leisten 8, 9, gemessen in Richtung parallel zu den Seitenwänden 4 und 6. Im unteren Bereich ist die Leiste 15 mit zwei stufenartigen Verbreiterungen 16 und 17 versehen, die sich ein Stück weit in Richtung auf die gegenüberstehenden Leisten 8, 9 erstrecken. Auch die Leiste 15 ist mit äquidistant verteilten Schlitzen versehen, die dasselbe Querschnittsprofil aufweisen wie die Schlitze 11 in den beiden seitlichen Leisten 8, 9, weshalb die Schlitze in der Leiste 15 ebenfalls mit 11 bezeichnet sind, obwohl sie in Richtung auf die beiden seitlichen Leisten 8, 9 zu offen sind. Die Schlitze 11 in der mittleren Leiste 15 fluchten mit den jeweils zugehörigen Schlitzen 11 in den seitlichen Leisten 8, 9 und reichen auch ein Stück weit bis in die Verbreiterungen 16 und 17 hinein.

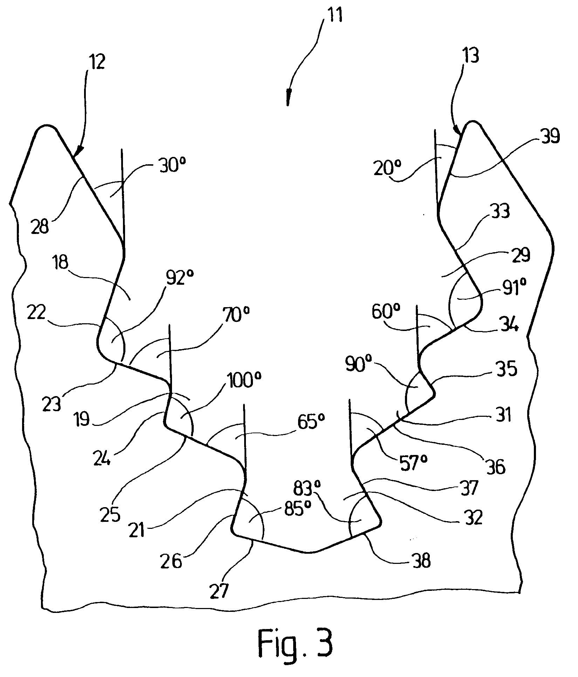

Das Querschnittsprofil der Schlitze 11 ist in Fig.3 veranschaulicht. Unter Querschnittsprofil ist dabei die Projektion der Schlitze 11 auf eine Ebene zu verstehen, die senkrecht zu einer Achse verläuft, auf der miteinander korrespondierende Schlitze 11 der Leisten 8, 9 und 15 aufgereiht sind.

In der Flanke 12 sind in Richtung auf den Boden 7 insgesamt drei V-förmige Nuten 18, 19 und 21 enthalten. Die V-förmige Nut 18 ist von geraden Seitenwänden 22, 23, die Nut 19 von geraden Seitenwänden 24, 25 und die Nut 21 von ebenfalls geraden Wänden 26, 27 begrenzt. Jeweils benachbarte Nuten 18 .. 21 gehen mit ihren benachbarten Wänden 23, 25, 26 ineinander über.

Da die am weitesten obenliegende Nut 18 ein Stück weit in Richtung auf den Grund des Schlitzes 11 versetzt ist, bleibt ein gerades Stück 28 der Flanke 12 übrig.

Die Flanke 13 ist in der gleichen Weise mit drei V-förmigen Nuten 29, 31,32 versehen, die ebenfalls wiederum von geraden Seitenwänden 33 .. 38 begrenzt sind. Entsprechend dem Höhenversatz der ersten Nut 29 bleibt auch auf der Flanke 13 ein gerades Stück 39 am oberen Ende des Schlitzes 11 stehen.

Die Winkel, unter denen die Flankenabschnitte 28, 39 sowie die Wände 22 .. 27 sowie 33 .. 38 bei einem Ausführungsbeispiel gegeneinander bzw. bezüglich der Vertikalen verlaufen, ist in Fig. 3 eingetragen. Darüber hinaus gilt folgende allgemeine Beziehung: Die Wände 33, 35 und 37 sind gegenüber der Vertikalen um einen Winkel geneigt, der gleich oder geringfügig größer ist als der Winkel, den der gegenüberliegende Flankenabschnitt 28 mit der senkrechten Richtung einschließt. Der Abstand zwischen dem Flankenabschnitt 28 und den betreffenden Seitenwänden 33, 35, 37, gemessen senkrecht zu dem Flankenabschnitt 28 bzw. dessen gerader Verlängerung, ist etwa gleich der Stärke der mit der entsprechenden Wand 33, 35, 37 zusammenwirkenden Hülle. Die entsprechende Beziehung gilt auch zwischen dem Flankenabschnitt 39 und den Wänden 22, 24, 26 an der gegenüberliegenden Flanke 12. Auch diese Seitenwände 22, 24, 26 sind gegenüber der Vertikalen geringfügig stärker geneigt als der Flankenabschnitt 39,und ihr Abstand von dem Flankenabschnitt 39 bzw. dessen gerader Verlängerung entspricht der Stärke der mit der jeweiligen Wand 22, 24, 26 zusammenwirkenden Hülle.

Schließlich gehorchen noch die Abstände der V-förmigen Nuten 18 .. 21 sowie 29 .. 32 einer besonderen Beziehung. Der Abstand zwischen derjenigen Nase, an der die Wand 23 in die Wand 24 übergeht und der etwa auf gleicher Höhe liegenden gegenüberliegenden Nase, an der die Wand 34 mit der Wand 35 zusammenstößt, ist kleiner als der Abstand zwischen dem Flankenabschnitt 28 sowie der Wand 33,der wiederum gleich dem Abstand ist zwischen der Wand 22 und dem Flankenabschnitt 39. Dies hat zur Folge, daß eine Hülle, die in den Schlitz 11 eingesteckt wird und eine Dicke hat entsprechend dem Abstand zwischen dem Flankenabschnitt 39 und der Seitenwand 92, nicht zwischen den besagten Nasen hindurchkommen kann und deswegen nur mit den Nuten 18 und 29 zusammenwirken kann.

Für die nächsten beiden Nuten 19 und 31, die wiederum ebenfalls etwa auf gleicher vertikaler Höhe liegen, gilt eine ähnliche Beziehung wie die oben erwähnte. Der Abstand, den die Nase zwischen der Wand 25 und der Wand 26 von der Nase zwischen der Wand 36 und der Wand 37 hat, ist kleiner als der Abstand zwischen dem Flankenabschnitt 39 und der Wand 24 bzw. der Abstand zwischen dem Flankenabschnitt 28 und der Wand 35. Demzufolge kann eine Hülle, die mit den Nuten 19 und 31 zusammenwirken soll, zwar die darüberliegenden Nuten 18 und 29 passieren, gelangt jedoch nicht in den Bereich der Nuten 21 und 32.

Wenn in die beschriebene Vorrichtung 1 die Cassette einer CD-Platte aufbewahrt werden soll, wird die Cassette mit einer Kante voraus in miteinander fluchtende Schlitze 11 der Leisten 8, 9, 15 eingesteckt. Infolge ihrer Dicke kann die Kassette nur bis zu den V-förmigen Nuten 18, 29 eingesetzt werden, weil der lichte Abstand zwischen den freien Kanten der Wände 23, 34 kleiner ist als die Dicke der Cassette. Sie wird deswegen mit ihrer Kante auf einer der beiden Wände 23, 34 aufstehen. Angenommen, die Cassette ist nach hinten, d.h. bezogen auf Fig. 3, nach links geneigt, dann wird die Cassette mit ihrer Rückseite auf dem Flankenabschnitt 28 aufliegen, der etwa parallel zu der Rückseite der Cassette verläuft. Die gegenüberliegende Kante an der Schmalseite steht auf der Wand 34 auf, während ein Umfallen der in dem Schlitz 11 steckenden Cassette von der Wand 37 der Nut 29 verhindert wird. An diese Wand 33 legt sich die Vorderfläche der Cassette an.

Obwohl die eingesetzte Cassette nicht ganz 10 mm tief in den Schlitzen 11 steckt, wird sie an der entsprechenden Kante sicher gehalten, ohne nach hinten umkippen zu können. Der Neigungswinkel der Cassette beträgt etwa 30°. Aus dieser Lage kann die Cassette ohne weiteres nach vorne, d.h. in Fig. 3 nach rechts, umgeklappt werden, wobei die in dem Schlitz 11 sitzende Schmalseite der Cassette auf der Wand 34 eine Gleitbewegung in Richtung auf die Wand 23 der anderen Flanke 12 macht. Wegen der oben erwähnten Abmessungen kann die Cassette beim Umklappen nicht tiefer in den Schlitz 11 hineinfallen und kann, ohne sich zu verhaken, die andere nach vorne geneigte Stellung einnehmen, in der sie etwa um 20° entsprechend dem Winkel des Flankenabschnittes 39 geneigt ist. In dieser Stellung steht die Cassette auf der Wand 23 auf, d.h. diese Wand nimmt im wesentlichen die Vertikalkraft der eingesetzten Cassette auf. Das Kippmoment dagegen wird im wesentlichen aufgenommen von der Wand 22 in Verbindung mit dem Flankenabschnitt 39.

Wenn anstelle der verhältnismäßig dicken Kassette der CD-Platte eine dünnere Hülle verwendet wird, kann die Hülle in den Schlitzen 11 bis zu den V-förmigen Nuten 19 und 31 vordringen, so daß sie in den gekippten stabilen Lagen durch ein Zusammenwirken des Flankenabschnittes 28 mit den Wänden 35 und 36 bzw. in der nach vorne gekippten Lage von dem Flankenabschnitt 39 sowie den Wänden 24 und 25 gehalten wird, d.h. von der Nut 19.

Eine dünne kuvertartige Hülle schließlich gelangt bis zu den Nuten 21 und 32, die zum Halten der Hülle in der oben beschriebenen Weise mit den Flankenabschnitten 28 und 39 zusammenwirken.

Da Hüllen mit geringeren Querabmessungen in der Regel auch dünnere Hüllen sind, sind, wie Fig. 2 erkennen läßt, die V-förmigen Nuten 21 und 32 der Schlitze 11 in den Verbreiterungen 16 und 17 ausgebildet.

Ersichtlicherweise ist es mit der neuen Vorrichtung 1 möglich, Hüllen im wesentlichen stehend aufzubewahren, wobei die Hüllen unabhängig von ihrer Dicke bzw. Stärke praktisch immer denselben Neigungswinkel einnehmen und deswegen gemischt in ein und derselben Vorrichtung 1 aufbewahrt werden können. Außerdem ist es möglich, innerhalb der in der Vorrichtung 1 aufbewahrten Hüllen zu blättern, d.h. die aufbewahrten Hüllen aus einer nach hinten geneigten stabilen Lage in eine nach vorne geneigte stabile Lage umzuklappen, wobei sowohl die nach hinten geneigten als auch die nach vorne geneigten in der jeweiligen Gruppe etwa parallel zueinander verlaufen, ohne daß dünne Hüllen wesentlich stärker geneigt sind als dücke Hüllen oder daß bei dünnen Hüllen die Gefahr besteht, daß sie aus den Schlitzen 11 herausrutschen. Dies wird erreicht, obwohl die V-förmigen Schlitze 11 eine Tiefe, gemessen in vertikaler Richtung, von weniger als 17 mm aufweisen, womit die Vorrichtung 1 insgesamt sehr flach sein kann.

Bei dem beschriebenen bevorzugten Ausführungsbeispiel ist der Winkel, den die eingesteckten Hüllen gegenüber der Vertikalen einnehmen, etwas größer nach hinten vom Betrag der weggeklappten Zustand als im nach vorne geklappten Zustand als im nach vorne geklappten Zustand, so daß ein Lesen der Beschriftung besser möglich ist.

## Patentansprüche

1. Vorrichtung (1) zum stehenden Aufbewahren von viereckigen, steifen und flachen Hüllen, wie Hüllen von CDs, Floppydisks, Minidisks u.dgl., mit zwei parallel mit Abstand zueinander verlaufenden horizontalen Leisten (8, 9), die miteinander verbunden sind und von denen jede mit mehreren an jeder Leiste (8, 9) äquidistant verteilt angeordneten Halteeinrichtungen versehen ist, wobei jede Halteeinrichtung an einer Leiste (8, 9) mit einer anderen Halteeinrichtung an der anderen Leiste (8, 9) fluchtet, und jede Halteeinrichtung von einem nach oben offenen Schlitz (11) zur Aufnahme der Hüllen gebildet ist, der außerdem in Richtung auf die abliegende Leiste (8, 9) zu offen ist und der zwei einander zugekehrte Flanken (12, 13) aufweist, dadurch gekennzeichnet, daß sich in jeder Halteeinrichtung der Schlitz (11) nach unten so verjüngt, daß die Kippwinkel von aufbewahtlen Hüllen Unterschiedlicher Dicke im wesentlichen gleich sind.

2. Vorrichtung nach Anspruch 1, dadurch gekennzeichnet, daß in jeder der beiden Flanken (12, 13) wenigstens eine V-förmige Nut (18...21, 29...32) mit zwei Wänden (22...27, 33...38) enthalten ist, deren Längserstreckung senkrecht zu der Leiste (8, 9) verläuft, wobei eine Wand (22...27, 33...38) jeder Nut (18...21, 29...32) etwa parallel zu der gegenüberliegenden Flanke (12, 13) verläuft, daß die einander entsprechenden Nuten (18...21, 29...32) etwa auf derselben Höhe liegen und daß der Schlitz (11) in jeder zu der Leiste (8, 9) parallelen Schnittebene dasselbe Querschnittsprofil aufweist.

3. Vorrichtung nach Anspruch 1, dadurch gekennzeichnet, daß in jeder Flanke (12, 13) mehrere Nuten (18...21, 29...32) enthalten sind, wobei die beiden Flanken (12, 13) dieselbe Anzahl von Nuten (18...21, 29...32) enthalten und daß die Nuten (18...21, 29...32) mit ihren benachbarten Wänden ineinander übergehen.

4. Vorrichtung nach Anspruch 2, dadurch gekennzeichnet, daß in jeder Flanke (12, 13) drei Nuten (18... 21, 29...32) enthalten sind.

5. Vorrichtung nach Anspruch 1, dadurch gekennzeichnet, daß die Schlitze (11) nutenförmig ausgebildet sind und an ihren von der gegenüberliegenden Leiste (8, 9) abliegenden Seite verschlossen sind.

6. Vorrichtung nach Anspruch 1, dadurch gekennzeichnet, daß zwischen den beiden parallel mit Abstand zueinander verlaufenden Leisten (8, 9) wenigstens eine weitere Leiste (15) enthalten ist, die parallel zu den äußeren Leisten (8, 9) verläuft und daß die wenigstens eine zusätzliche Leiste (15) ebenfalls mit Schlitzen (11) versehen ist, die in ihrer Anzahl mit der Anzahl der Schlitze (11) in den äußeren Leisten (8, 9) übereinstimmen und die dasselbe Querschnittsprofil wie die Schlitze (11) in den äußeren Leisten (8, 9) haben sowie mit diesen fluchten.

7. Vorrichtung nach Anspruch 6, dadurch gekennzeichnet, daß lediglich eine zusätzliche Leiste (15) vorgesehen ist.

8. Vorrichtung nach Anspruch 7, dadurch gekennzeichnet, daß die zusätzliche Leiste (15) mittig zwischen den äußeren Leisten (8, 9) angeordnet ist.

9. Vorrichtung nach Anspruch 6, dadurch gekennzeichnet, daß die zusätzliche Leiste (15) in ihrem dem tiefsten Bereich des Schlitzes (11) entsprechenden Bereich Verbreiterungen (16, 17) in Richtung auf die äußeren Leisten (8, 9) aufweist und daß sich das Profil des Schlitzes (11) in den Verbreiterungen (16, 17) fortsetzt.

10. Vorrichtung nach Anspruch 1, dadurch gekennzeichnet, daß sie die Gestalt einer flachen, nach oben offenen viereckigen Schale ( 2) mit paarweise mit Abstand parallel zueinander verlaufenden Seitenwänden (3,5; 4,6) sowie einem ebenen Boden (7) aufweist und daß die Leisten (8, 9) an der Innenseite von zwei einander gegenüberliegenden Seitenwänden (3, 5) angeordnet sind.

11. Vorrichtung nach den Ansprüchen 6 und 10, dadurch gekennzeichnet, daß die wenigstens eine zusätzliche Leiste (15) auf dem Boden (7) angeordnet ist.

12. Vorrichtung nach den Ansprüchen 10 oder 11, dadurch gekennzeichnet, daß die Schale (2) sowie die Leisten (8, 9, 15) miteinander einstückig sind.

13. Vorrichtung nach den Ansprüchen 10 oder 12, dadurch gekennzeichnet, daß sie als Kunststofformteil ausgebildet ist.

14. Vorrichtung nach Anspruch 2, dadurch gekennzeichnet, daß der Winkel, unter dem die Wände (22...27, 33...38) der Nuten (18...22, 29...32) gegeneinander verlaufen, zwischen 80° und 100° liegt.

15. Vorrichtung nach Anspruch 1, dadurch gekennzeichnet, daß die Flanken (12, 13) der Schlitze (11) zwischen 10° und 40° gegenüber der Vertikalen geneigt sind.

## Claims

1. Device (1) for standing storage of square, rigid and flat cassettes or envelopes, such as cassettes for CDs, floppy disks, mini disks and similar, having two horizontal ledges (8, 9), which run parallel to and at a distance from one another, are connected to one another and each of which is provided with several holding arrangements disposed on each ledge (8, 9) at equal distance from one another, each holding arrangement on one ledge (8, 9) being aligned with another holding arrangement on the other ledge (8, 9), and each holding arrangement is formed by a slot (11), which is open at the top to receive the cassettes, is also open in the direction facing the remote ledge (8, 9) and has two facing flanks (12, 13), characterised in that the slot (11) in each holding arrangement tapers downwards so that the tilting angles of stored cassettes of different thickness are substantially equal.

2. Device according to Claim 1, characterised in that at least one V-shaped groove (18...21, 29...32) with two walls (22...27, 33...38) is contained in each of the two flanks (12, 13), the longitudinal extension of said groove running perpendicular to the ledge (8, 9), one wall (22...27, 33...38) of each groove (18...21, 29...32) running approximately parallel to the opposite flank (12, 13); that the corresponding grooves (18...21, 29...32) lie on approximately the same level; and that the slot (11) has the same cross-sectional profile in each cutting plane parallel to the ledge (8, 9).

3. Device according to Claim 1, characterised in that several grooves (18...21, 29...32) are contained in each flank (12, 13), in which case both flanks (12, 13) contain the same number of grooves (18...21, 29...32); and that the grooves (18...21, 29...32) merge into one another at their adjacent walls.

4. Device according to Claim 2, characterised in that three grooves (18...21, 29...32) are contained in each flank (12, 13).

5. Device according to Claim 1, characterised in that the slots (11) are constructed in the form of grooves and are closed off on their side remote from the opposite ledge (8, 9).

6. Device according to Claim 1, characterised in that at least one further ledge (15), which runs parallel to the outer ledges (8, 9), is provided between the two ledges (8, 9) running parallel to and at a distance from one another; and that the at least one additional ledge (15) is also provided with slots (11), which are equal in number to the number of slots (11) in the outer ledges (8, 9) and have the same cross-sectional profile as the slots (11) in the outer ledges (8, 9) as well as being aligned therewith.

7. Device according to Claim 6, characterised in that only one additional ledge (15) is provided.

8. Device according to Claim 7, characterised in that the additional ledge (15) is arranged in the centre between the outer ledges (8, 9).

9. Device according to Claim 6, characterised in that in its area corresponding to the deepest region of the slot (11), the additional ledge (15) has portions (16, 17) widening towards the outer ledges (8, 9); and that the profile of the slot (11) continues into the widened portions (16, 17).

10. Device according to Claim 1, characterised in that it has the form of a shallow square shell (2) open at the top with side walls (3, 5; 4, 6) arranged in pairs extending parallel to and at a distance from one another and with a plane base (7); and that the ledges 8, 9) are arranged on the inside of two opposing side walls (3, 5).

11. Device according to Claims 6 and 10, characterised in that the at least one additional ledge (15) is arranged on the base (7).

12. Device according to Claim 10 or 11, characterised in that the shell (2) and the ledges (8, 9, 15) are integral to one another.

13. Device according to Claim 10 or 12, characterised in that it is constructed as a plastic moulding.

14. Device according to Claim 2, characterised in that the angle at which the walls (22...27, 33...38) of the grooves (18...22, 29...32) extend in relation to one another lies between 80° and 100°.

15. Device according to Claim 1, characterised in that the flanks (12, 13) of the slots (11) are inclined from the vertical at between 10° and 40°.

## Revendications

1. Dispositif (1) pour le stockage en position verticale d'enveloppes rectangulaires, plates et rigides, telles que par exemple des enveloppes de disques compacts (disques CD), de disquettes, de mini-disques et similaires, comportant deux barrettes (8, 9) mutuellement parallèles qui s'étendent horizontalement à distance l'une de l'autre, sont reliées entre elles et sont pourvues chacune de plusieurs dispositifs de maintien répartis de manière équidistante sur chaque barrette (8, 9), chaque dispositif de maintien d'une barrette (8, 9) étant aligné avec un autre dispositif de maintien sur l'autre barrette (8, 9) et chaque dispositif de maintien étant formé par une fente (11) ouverte vers le haut, destinée à recevoir les enveloppes, laquelle fente est en outre ouverte en direction de la barrette (8, 9) éloignée et présente deux flancs (12, 13) tournés l'un vers l'autre, caractérisé par le fait que, dans chaque dispositif de maintien, la fente (11) se rétrécit vers le bas de manière telle que les angles de pivotement d'enveloppes stockées ayant des épaisseurs différentes soient sensiblement égaux.

2. Dispositif selon la revendication 1, caractérisé par le fait que chacun des deux flancs (12, 13) comporte au moins une rainure (18...21, 29...32) en V avec deux parois (22...27, 33...38) dont la longueur est perpendiculaire à la barrette (8, 9), une paroi (22...27, 33...38) de chaque rainure (18...21, 29...32) étant sensiblement parallèle au flanc (12, 13) en vis-à-vis, par le fait que les rainures (18...21, 29...32) associées sont situées sensiblement à la même hauteur et par le fait que la fente (11), dans tout plan de coupe parallèle à la barrette (8, 9), présente le même profil en section transversale.

3. Dispositif selon la revendication 1, caractérisé par le fait que chaque flanc (12, 13) comporte plusieurs rainures (18...21, 29...32), les deux flancs (12, 13) comportant le même nombre de rainures (18...21, 29...32) et les rainures (18...21, 29...32) se raccordant entre elles par leurs parois voisines.

4. Dispositif selon la revendication 2, caractérisé par le fait que chaque flanc (12, 13) comporte trois rainures (18...21, 29...32).

5. Dispositif selon la revendication 1, caractérisé par le fait que les fentes (11) sont agencées en forme de rainures et sont fermées à leur extrémité éloignée de la barrette (8, 9) en vis-à-vis.

6. Dispositif selon la revendication 1, caractérisé par le fait qu'il est prévu entre les deux barrettes (8, 9) mutuellement parallèles, distantes l'une de l'autre, au moins une barrette (15) supplémentaire qui s'étend parallèlement aux barrettes (8, 9) extérieures et par le fait que la barrette (15) supplémentaire, au nombre d'au moins une, est également pourvue de fentes (11), dont le nombre correspond au nombre de fentes (11) des barrettes (8, 9) extérieures, et qui présentent le même profil en section transversale que les fentes (11) et sont alignées avec ces dernières.

7. Dispositif selon la revendication 6, caractérisé par le fait qu'il n'est prévu qu'une seule barrette (15) supplémentaire.

8. Dispositif selon la revendication 7, caractérisé par le fait que la barrette (15) supplémentaire est disposée au milieu entre les deux barrettes (8, 9)extérieures.

9. Dispositif selon la revendication 6, caractérisé par le fait que la barrette (15) supplémentaire, dans sa région qui correspond à la région la plus profonde de la fente (11), présente des prolongements (16, 17) en direction des barrettes (8, 9) extérieures et par le fait que le profil de la fente (11) se prolonge dans lesdits prolongements (16, 17).

10. Dispositif selon la revendication 1, caractérisé par le fait qu'il a la forme d'un bac (2) plat, rectangulaire, ouvert vers le haut, avec des parois latérales (3, 5; 4, 6) parallèles deux à deux, distantes l'une de l'autre, et avec un fond (7) plan et par le fait que les barrettes (8, 9) sont disposées sur la face intérieure de deux parois latérales (3, 5) situées mutuellement en vis-à-vis.

11. Dispositif selon les revendications 6 et 10, caractérisé par le fait que la barrette (15) supplémentaire, au nombre d'au moins une, est disposée sur le fond (7).

12. Dispositif selon les revendications 10 et 11, caractérisé par le fait que le bac (2) et les barrettes (8, 9, 15) forment un ensemble mono-bloc.

13. Dispositif selon la revendication 10 ou la revendication 12, caractérisé par le fait qu'il est réalisé sous la forme d'une pièce moulée en matériau synthétique.

14. Dispositif selon la revendication 2, caractérisé par le fait que l'angle sous lequel les parois (22...27, 33...38) des rainures (18...22, 29...32) se raccordent entre elles est compris entre 80° et 100°.

15. Dispositif selon la revendication 1, caractérisé par le fait que les flancs (12, 13) des fentes (11) sont inclinés suivant un angle compris entre 10° et 40° par rapport à la verticale.
